(19) Europäisches Patentamt
European Patent Office
Office européen des brevets

(11) EP 3 543 009 B1

(12) **EUROPEAN PATENT SPECIFICATION**

(45) Date of publication and mention of the grant of the patent:
**07.06.2023 Bulletin 2023/23**

(21) Application number: **17870935.8**

(22) Date of filing: **09.11.2017**

(51) International Patent Classification (IPC):
***B32B 27/18*** (2006.01) ***B32B 27/20*** (2006.01)
***B32B 27/32*** (2006.01) ***B32B 27/00*** (2006.01)
***B32B 7/06*** (2019.01) ***B01D 53/26*** (2006.01)
***B32B 1/00*** (2006.01) ***B32B 5/16*** (2006.01)
***B32B 7/12*** (2006.01) ***B32B 25/04*** (2006.01)
***B32B 25/16*** (2006.01) ***B32B 27/08*** (2006.01)
***B32B 27/14*** (2006.01) ***B32B 27/16*** (2006.01)
***B32B 27/30*** (2006.01) ***B32B 27/36*** (2006.01)

(52) Cooperative Patent Classification (CPC):
**B32B 25/16; B01D 53/26; B32B 1/00; B32B 5/16; B32B 7/06; B32B 7/12; B32B 25/047; B32B 27/08; B32B 27/14; B32B 27/16; B32B 27/306; B32B 27/32; B32B 27/36;** B32B 2250/03; B32B 2250/04; (Cont.)

(86) International application number:
**PCT/JP2017/040388**

(87) International publication number:
**WO 2018/092672 (24.05.2018 Gazette 2018/21)**

(54) **MULTILAYER PROTECTIVE FILM FOR WATER ABSORPTION**

MEHRSCHICHTIGE SCHUTZSCHICHT FÜR WASSERABSORPTION

FILM PROTECTEUR MULTICOUCHE POUR ABSORPTION D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2016 JP 2016225409**

(43) Date of publication of application:
**25.09.2019 Bulletin 2019/39**

(73) Proprietor: **Toyo Seikan Group Holdings, Ltd.**
**Shinagawa-ku**
**Tokyo 141-8627 (JP)**

(72) Inventors:
- **NANGOU, Shunya**
  **Yokohama-shi, Kanagawa 240-0062 (JP)**
- **YAGISAWA, Misato**
  **Yokohama-shi, Kanagawa 240-0062 (JP)**
- **OKUYAMA, Shinpei**
  **Yokohama-shi, Kanagawa 240-0062 (JP)**
- **TAKAYAMA, Keisuke**
  **Yokohama-shi, Kanagawa 240-0062 (JP)**

(74) Representative: **J A Kemp LLP**
**80 Turnmill Street**
**London EC1M 5QU (GB)**

(56) References cited:
**WO-A1-2015/053340** **WO-A1-2017/111138**
**JP-A- 2006 326 838** **JP-A- 2011 143 690**
**JP-A- 2011 143 691** **JP-A- 2011 161 777**
**JP-A- 2014 221 514** **US-A1- 2016 220 979**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 543 009 B1

(52) Cooperative Patent Classification (CPC): (Cont.)
B32B 2255/10; B32B 2255/20; B32B 2255/205; B32B 2255/28; B32B 2260/025; B32B 2260/046; B32B 2264/102; B32B 2264/104; B32B 2264/108; B32B 2307/724; B32B 2307/7244; B32B 2307/7246; B32B 2307/728; B32B 2307/748

## Description

Technical Field:

This invention relates to the use of a water-absorbing laminated protection film. More specifically, the invention relates to the use of a water-absorbing laminated protection film for being temporarily stuck to the surface of a hygroscopic base material such as hygroscopic film when the hygroscopic base material is to be dried.

Background Art:

A hygroscopic sheet equipped with a hygroscopic resin layer in which a desiccant is dispersed has heretofore been widely used for absorbing moisture and for removing moisture.

Hygroscopic sheets of this kind have now been proposed having a variety of layer constitutions. A patent document 1 is proposing a hygroscopic sheet comprising a desiccant layer, a moisture-permeating sheet provided on one surface of the desiccant layer and an adhesive layer provided on the other surface of the desiccant layer. As the moisture-permeating sheet, the patent document 1 describes that there can be used a cellophane sheet, an acetate sheet, a nylon sheet and the like sheets.

Incidentally, electronic devices that have been developed in recent years, such as organic electroluminescent (organic EL) devices, solar cells, touch panels and electronic papers, must avoid the leakage of electric charge and, therefore, require a high degree of water-barrier property for the plastic base materials that form circuit boards and for the plastic base materials such as films that are used for sealing the circuit boards.

As the gas-barrier laminate having such a high degree of water-barrier property, a patent document 2 proposes a gas-barrier laminate (film) having an inorganic barrier layer, an organic layer and a water-trapping layer that are formed on a base film. There is described that the water-trapping layer is formed by using a hygroscopic polymer (concretely, a polyamide) or is formed by dispersing a hygroscopic material such as silica gel or aluminum oxide in a high molecular binder such as an electron ray-curable or an ultraviolet ray-curable resin.

Further, a patent document 3 proposes a gas-barrier laminate having a gas-barrier layer and a hygroscopic layer that are vapor-deposited on the surface of a plastic base material, the hygroscopic layer containing an alkylene oxide, nano particles of acrylate or an organic metal complex.

Moreover, a patent document 4 proposes a gas-barrier laminate having a water-trapping layer in which a specific granular desiccant is dispersed in the matrix of an ionic polymer, the water-trapping layer being formed on an inorganic barrier layer on a plastic base material.

The above gas-barrier laminates all include a water-capturing layer having excellent hygroscopic property, a hygroscopic layer or a water-trapping layer in order to maintain a high degree of water-barrier property. It is, however, necessary that these layers are maintained in a state of containing water in amounts as small as possible (most desirably, in a completely dry state). When used in a state in which they are maintained, the above-mentioned gas-barrier laminates exhibit the water-barrier property to their maximum degrees.

For this purpose, it is desired to execute the drying treatment when the gas-barrier laminates are prepared or when the hydroscopic layers are formed. In this case, it is desired to provide the use of a protection film so that the water released from the hygroscopic layers will not be absorbed again by the hygroscopic layers.

At present, however, no close study has yet been made concerning the protection films.

It can be contrived, for example, to stick a known hygroscopic sheet onto the surface of a hygroscopic layer to thereby dry the hygroscopic layer in this state. However, the known hygroscopic sheet has the object of interrupting the infiltration of water by absorbing the water from the atmosphere and, therefore, is not suited for drying the hygroscopic layer. Concretely describing, let it be presumed that the hygroscopic sheet of the patent document 1 is used being stuck on the surface of the hygroscopic base material (hygroscopic layer) . In this case, the moisture-permeating sheet is provided on the surface of the hygroscopic sheet (on the desiccant layer). Therefore, the desiccant layer absorbs the water from the atmosphere, and the water released from the hygroscopic layer cannot be effectively trapped.

Further, a patent document 5 discloses an art of producing organic EL devices having an organic material layer on a flexible support member based on a roll-to-roll method, wherein the organic material layer that is formed is wound up by overlapping a desiccant-containing protection film thereon. As the protection film, the patent document 5 is describing a film of a structure in which a desiccant-containing layer is sandwiched by polyester resin layers such as polyethylene naphthalate (PEN) layers.

The protection film of the patent document 5 is used for removing the water from the devices. Here, however, since a lowly hygroscopic polyester resin layer is interposed between the desiccant-containing layer and the hygroscopic base material, it is not allowed to effectively trap the water released from the hygroscopic base material.

Patent document 6 is concerned with the provision of a moisture absorbing film which can shorten a time taken to reach target humidity, adjust the humidity to the target one, effectively prevent absorption of moisture from outside, and house a product such as food, a medicine, a precision instrument and an electronic component with high preservability, and with the provision of a package. Provided is a moisture absorbing film which absorbs steam. When the moisture absorbing film having an area S (cm) is allowed to stand in a container having a volume V (ml) (V=2×S) at 25°C in 90% relative humidity, an average steam absorption rate during 5 hours from tight closure of the container is 0.0005 mg/(h-cm) or higher.

Patent document 7 is concerned with an absorbent film and a substrate having extremely simple production without having an adhesive layer that can generate volatile components. The absorbent laminate contains a substrate, which has an inorganic material or a low-thermal-contraction organic material, and an absorbent film on the surface of the substrate. The organic material of the substrate has a rate of thermal contraction in the direction of conveyance thereof when performing hot pressing by means of a heating roller under the conditions of 140° C., a roller pressure of 0.1 MPa, and a conveyance speed of 0.4 m/min of less than 0.6%. The absorbent film has an absorbent layer adhered to the surface of the substrate without an adhesive layer therebetween and containing less than 87 vol % and at least 25 vol % of a thermoplastic resin binder and over 13 vol % and no greater than 75 vol % of an inorganic absorption agent.

Prior Art Documents:

Patent Documents:

Patent document 1: JP-A-2006-326838
Patent document 2: JP-A-2009-90633
Patent document 3: JP-A-2011-131395
Patent document 4: WO2014/123197
Patent document 5: Japanese Patent No. 5109606
Patent document 6: JP-A-2014-221514
Patent document 7: US 2016/220979

Outline of the Invention:

Problems that the Invention is to Solve:

It is, therefore, an object of the present invention to provide the use of a water-absorbing laminated protection film as a protection film at the time of drying the hygroscopic base materials.

Means for Solving the Problems:

According to the present invention, there is provided the use of a water-absorbing laminated protection film in drying a hygroscopic base material that includes a water-trapping layer having a water-trapping property, wherein the water-absorbing laminated protection film includes a hygroscopic resin layer in which a desiccant is dispersed and a surface protection resin layer provided on one surface of said hygroscopic resin layer, wherein said surface protection resin layer has a coefficient of moisture permeability of not more than 40 g/m$^2$·day at 40°C- 90%RH, and the other surface of said hygroscopic resin layer is a hygroscopically working surface, wherein on the hygroscopically working surface of said hygroscopic resin layer, there is provided an adhesive resin layer having a coefficient of moisture permeability higher than that of said surface protection resin layer;
and wherein the use comprises: (a) the hygroscopically working surface of said water-absorbing laminate film being opposed, and stuck, to said hygroscopic base material via the adhesive resin layer in the step of drying; and (b) after the drying, the water-absorbing laminated protection film being removed from the hygroscopic base material.

The present invention can favorably employ the following embodiments:

(1) The surface protection resin layer has a coefficient of moisture permeability of not less than 1.0 g/m$^2$·day at 40°C. 90%RH;
(2) The adhesive resin layer has a coefficient of moisture permeability of not less than 10 g/m$^2$·day at 40°C- 90%RH;
(3) The desiccant is an agent that exhibits a chemically adsorbing property upon reacting with the water;
(4) The hygroscopic resin layer is a layer obtained by dispersing the desiccant in an olefin type resin which is selected from a low-density polyethylene, a high-density polyethylene, a polypropylene, a poly 1-butene, a poly 4-methyl-1-pentene or a random or block copolymer of $\alpha$-olefins such as ethylene, propylene, 1-butene or 4-methyl-1-pentene, or a cyclic olefin copolymer thereof.

Effects of the Invention:

The water-absorbing laminated protection film for use in the present invention has a surface protection resin layer provided on one surface of the hygroscopic resin layer in which the desiccant is dispersed. The surface protection resin layer is a resin layer having a small coefficient of moisture permeability. Therefore, the water is effectively suppressed from infiltrating into the hygroscopic resin layer through the surface protection resin layer. That is, the other surface of the hygroscopic resin layer which is not provided with the surface protection resin layer serves as the hygroscopically working surface; i.e., the water flows through this surface (hygroscopically working surface) into the hygroscopic resin layer and is trapped by the desiccant.

Therefore, the water-absorbing laminated protection film works to dry the hygroscopic base material with its hygroscopically working surface being stuck to the surface of the hygroscopic base material. Accordingly, the water contained in the hygroscopic base material can be effectively released. That is, the water released from the hygroscopic base material due to drying is effectively trapped by the desiccant in the hygroscopic resin layer. This effectively alleviates such an inconvenience that the water that is released is absorbed again by the hygroscopic base material.

The water-absorbing laminated protection film for use in the present invention can be effectively used specifically for drying the hygroscopic base material that has an excellent hygroscopic capability. For example, upon sticking the water-absorbing laminated protection film onto the gas-barrier laminate that has, on the inorganic barrier layer, a water-trapping layer of a structure in which the hygroscopic agent is dispersed in an ionic polymer, the water-trapping layer is allowed to exhibit its excellent hygroscopic capability to its maximum degree.

Brief Description of the Drawings:

[Fig. 1] It is a sectional view schematically illustrating a basic layer structure of a water-absorbing laminated protection film (reference Example).

[Fig. 2] It is a sectional view schematically illustrating the layer structure of the water-absorbing laminated protection film for use in the present invention.

[Fig. 3] It is a sectional view schematically illustrating a state of using the water-absorbing laminated protection film for use in the present invention.

Modes for Carrying Out the Invention:

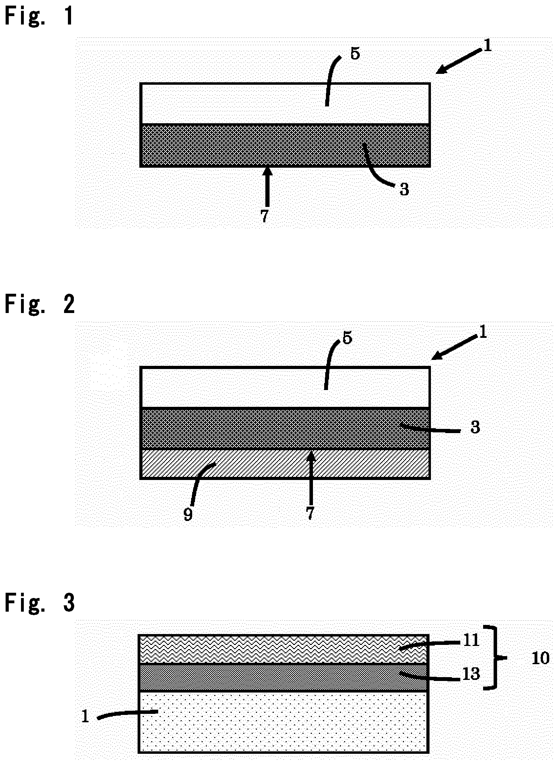

Referring to Fig. 1, showing a reference Example, a water-absorbing laminated protection film (hereinafter often referred to simply as protection film) generally designated at 1 includes a hygroscopic resin layer 3 and a surface protection resin layer 5 provided on one surface of the hygroscopic resin layer 3. The other surface of the hygroscopic resin layer 3 (surface on the side where no surface protection resin layer is provided) serves as a hygroscopically working surface 7. Fig. 2, showing a water-absorbing laminated protection film for use in the present invention, also contains each of the above layers.

In the protection film 1, the hygroscopic resin layer 3 is a resin layer in which a desiccant is dispersed. As the desiccant, there can be used an inorganic or organic desiccant that has been known per se.

As the inorganic desiccant, there can be exemplified zeolite, alumina, activated carbon and clay minerals such as montmorillonite, as well as silica gel, calcium oxide, magnesium oxide, barium oxide, calcium chloride and magnesium sulfate.

As the organic desiccant, there can be exemplified a crosslinked product of anionic polymer or a partly neutralized product thereof. As the anionic polymer, there can be exemplified those obtained by polymerizing at least one of an anionic monomer as represented by a carboxylic acid type monomer ((meth)acrylic acid, maleic acid anhydride or the like), a sulfonic acid type monomer (halogenated vinylsulfonic acid, styrenesulfonic acid, vinylsulfonic acid or the like), a phosphonic acid type monomer (vinylphosphoric acid or the like), or salts of monomers thereof, or those obtained by further copolymerizing them with other monomers.

In the present invention, a desiccant such as calcium oxide that traps the water by the chemical absorption relying on the chemical reaction with the water, is more preferably used than the desiccant that taps the water by the physical adsorption, such as zeolite or silica gel, from the standpoint of effectively trapping the water released from the hygroscopic base material at the time of drying the hygroscopic base material that will be described later.

It is, further, desired that the desiccant has a small grain size from such a standpoint that it can be homogeneously dispersed in the resin and that it has a large specific surface area. For instance, it is desired that the desiccant has a mean primary grain size (D50) of not more than 20 $\mu$m calculated as volume as measured by the laser diffraction.light scattering method. Usually, it is desired that the desiccant is dispersed in the hygroscopic resin layer in an amount of 5 to 80 parts by mass per 100 parts by mass of the resin that is the matrix.

As the resin that serves as the matrix in the hygroscopic resin layer 3, there can be used any known thermoplastic resins without specific limitation. Usually, there is used an olefin type resin such as a low-density polyethylene, a high-density polyethylene, a polypropylene, a poly 1-butene, a poly 4-methyl-1-pentene or a random or block copolymer of $\alpha$-olefins such as ethylene, propylene, 1-butene or 4-methyl-1-pentene, or a cyclic olefin copolymer thereof from the standpoint of cost and stickiness to the surface protection resin layer 5 or the hygroscopic base material that will be described later.

Among the above-mentioned olefin type resins according to the present invention, there can be preferably used a low-density polyethylene (LDPE), a linear low-density polyethylene (LLDPE), a polypropylene (PP) and a blend thereof from the standpoint of their low hygroscopic property, effectively preventing the release of water from the hygroscopic resin layer 3 and preventing the desiccant from losing its activity before it is put to use. Among them, there can be particularly preferably used the low-density polyethylene (LDPE) and the linear low-density polyethylene (LLDPE) .

The surface protection resin layer 5 is a layer that prevents the water from infiltrating into the hygroscopic resin layer 3 from the atmosphere. To secure the water-barrier property, the surface protection resin layer 5 should have coefficient of moisture permeability at 40°C. 90%RH of 1 to 40 $g/m^2 \cdot day$ and, specifically, 1 to 30 $g/m^2 \cdot day$. If the coefficient of moisture permeability is too high, the hygroscopic property of the desiccant in the hygroscopic resin layer 3 is deteriorated in short periods of time due to the infiltration of water from the atmosphere during the of production prior to the drying step or during the step of handling.

There is no particular limitation on the resin for forming the surface protection resin layer 5 provided it is capable of maintaining the above-mentioned coefficient of moisture permeability. From the standpoint of satisfying the above-mentioned coefficient of moisture permeability with a small thickness, however, it is desired to use an olefin resin that is used for forming the hygroscopic resin layer 3 or to use a thermoplastic polyester such as polyethylene terephthalate (PET), polybutylene terephthalate or polyethylene naphthalate (PEN). More preferably, an olefin type resin is used. From the standpoint of favorable adhesiveness to the hygroscopic resin layer 3, however, it is most desired to use an ethylene type resin or a propylene type resin.

Upon forming the surface protection resin layer by using the above-mentioned resin, it is made possible to satisfy a predetermined coefficient of moisture permeability with a thickness of, for example, not less than 10 $\mu$m.

When the protection film 1 for use in the present invention is used as will be understood from the foregoing description, the surface protection resin layer 5 prevents the infiltration of water into the hygroscopic resin layer 3 from the atmosphere. Furthermore, the other surface of the hygroscopic resin layer 5 serves as the hygroscopically working surface 7 and in which the desiccant traps the water that infiltrates through the surface 7.

By sticking the hygroscopically working surface 7 to the hygroscopic base material, the protection film 1 for use in the present invention works to dry the hygroscopic base material. Namely, by utilizing the blocking property of the resin that is forming the hygroscopically working surface 7, the protection film 1 can be temporarily stuck to the surface of the hygroscopic base material.

As shown in Fig. 2, further, an adhesive resin layer 9 is provided on the hygroscopically working surface 7. That is, upon sticking the protection film 1 to the surface of the hygroscopic base material via the adhesive resin layer 9, the protection film 1 can be reliably prevented from being removed in the step of drying and in other steps.

The adhesive resin layer 9 should not hinder the hygroscopic property of the hygroscopically working surface 7 and, therefore, should have a coefficient of moisture permeability higher than that of the above-mentioned surface protection resin layer. Namely, the adhesive resin layer 9 should, desirably, have a coefficient of moisture permeability which is, for example, not less than 10 $g/m^2 \cdot day$ and, more desirably, not less than 20 $g/m^2 \cdot day$ at 40°C.90%RH.

As the adhesive agent for forming the adhesive resin layer 9 according to the present invention, there can be used a known adhesive agent such as (meth)acrylic type adhesive agent or urethane type adhesive agent. The adhesive resin layer 9 may be formed by using the above adhesive agent in a predetermined thickness (e.g., not more than 30 $\mu$m) so that the above-mentioned coefficient of moisture permeability can be secured.

It is, further, desired that the adhesive resin layer 9 has an adhesive force that is adjusted to be not more than 2 N/25 mm, preferably, not more than 1 N/25 mm and, more preferably, not more than 0.3 N/25 mm to the surface of the hygroscopic base material to which the protection film 1 is to be stuck. This is because if the adhesive force is too large, then the surface of the hygroscopic base material (from which the protection film 1 will be removed) may often be damaged when the protection film 1 is removed.

Here, depending on the material of the surface of the hygroscopic base material to which the protection film 1 is to be stuck, the adhesive force is adjusted by introducing a crosslinked structure into the polymer that is forming the adhesive agent or by blending the adhesive agent with a lubricating agent or the like agent.

The above-mentioned protection film 1 for use in the present invention can be easily formed by co-extruding a desiccant-containing resin composition for forming the hygroscopic resin layer 3 and a resin composition for forming the surface protection resin layer 5. The adhesive resin layer 9 may be provided by applying an adhesive by using a roll onto the surface of the hygroscopic resin layer 3 that is formed as described above, or a composition containing a solvent and the adhesive may be applied thereon and may then be suitably dried.

In addition to the above-mentioned method of applying the adhesive agent, the adhesive resin layer 9 can also be formed on the protection film 1 for use in the present invention by, for example, co-extruding the three layers, i.e., the layer of a resin composition of a resin having adhesiveness, such as ethylene·vinyl acetate copolymer (EVA), soft polyolefin (LLDPE) or metallocene polyolefin type elastomer, the layer of a desiccant-containing resin composition for forming the hygroscopic resin layer 3, and the layer of a resin composition for forming the surface protection resin layer 5.

<Use>

The protection film 1 for use in the present invention is stuck to the hygroscopic base material to dry it. That is, the protection film 1 is used to maintain the hygroscopic layer possessed by the hygroscopic base material in an absolutely dry state so that the hygroscopic layer exhibits its hygroscopic property to its maximum degree. When the hygroscopic base material is simply dried, the water released from the hygroscopic base material (hygroscopic layer) is absorbed again by the hygroscopic base material (hygroscopic layer) ; i.e., the hygroscopic base material cannot be effectively dried. When the hygroscopic base material is dried by sticking the protection film 1 for use in the invention to it, however, the water released due to drying is trapped in the hygroscopic resin layer in the protection film 1 for use in the invention, and the water that is released can be effectively prevented from being absorbed again.

When the hygroscopic base material is to be more efficiently dried, furthermore, it is desired that the hygroscopic base material is put to the drying treatment in a form that the protection film 1 for use in the invention is laminated on the hygroscopic base material or the hygroscopic base material is wound up like a roll with the protection film 1 being laminated thereon. In this case, the water that is permeating can be absorbed not only from the hygroscopically working surface but also from the side of the surface protection resin under the temperature condition in the drying treatment. When the hygroscopic base material is to be dried in a state of being wound up like a roll under the temperature condition in the drying treatment, it is desired that the surface protection resin layer has a coefficient of moisture permeability which is high to some extent, e.g., has a coefficient of moisture permeability at 40°C. 90%RH of not less than 10 $g/m^2$·day and, more preferably, not less than 20 $g/m^2$ ·day. In this case, the permeating water can be absorbed not only from the hygroscopically working surface but also from the side of the surface protection resin enabling the hygroscopic base material to be dried more efficiently.

Therefore, the protection film 1 for use in the present invention is used, particularly preferably, for drying the hygroscopic base material that exhibits excellent hygroscopic property. This is because the more it is desired to attain a high degree of hygroscopic property and the more it is desired to achieve a high degree of water-barrier property, the more the hygroscopic base material must be used in a state of containing less water so as to exhibit the hygroscopic property to its maximum degree.

For instance, the protection film 1 for use in the present invention is stuck to a hygroscopic base material 10 having a layer constitution as shown in Fig. 3. The hygroscopic base material 10 is then dried in this state.

The hygroscopic base material 10 has a layer constitution in which, for example, a water-trapping layer 13 is provided on the surface of a barrier film 11, and the hygroscopically working surface 7 of the protection film 1 for use in the present invention is stuck to the water-trapping layer 13.

The above hygroscopic base material 10 comprising the barrier film 11 and the water-trapping layer 13 has been widely known. For example, there can be favorably used the gas-barrier laminates that are disclosed in JP-A-2014-168949 and JP-A-2014-168950 filed by the present inventors.

In the above hygroscopic base material (gas-barrier laminate), the barrier film 11 is the one that is obtained by forming an inorganic barrier layer on a film of a thermoplastic resin as represented by a polyester resin such as polyethylene terephthalate. The inorganic barrier layer is an inorganic vapor-deposited film formed by the physical deposition such as sputtering, vacuum vapor deposition or ion plating, or by the chemical deposition such as plasma CVD, and can be formed by using various metals or metal oxides. For instance, the most representative vapor-deposited film is a film of a silicon oxide formed by the plasma CVD using an organosilicon compound.

Further, as described in the above JP-A-2014-168949 and JP-A-2014-168950, the water-trapping layer 13 comprises an ionic polymer having cationic groups and anionic groups, and, more desirably, has such a structure that a hygroscopic agent is dispersed in the ionic polymer. The inorganic barrier film 11 and the water-trapping layer in combination exhibit a very high degree of water-barrier property, and have been favorably used as a substrate or a sealing layer for such electronic devices as organic EL devices.

That is, the hygroscopic base material 10 interrupts the permeation of water as it is absorbed by the ionic polymer in the water-trapping layer 13. Moreover, the water absorbed by the ionic polymer is trapped by the hygroscopic agent so will not to be released from the water-trapping layer 13. As the hygroscopic agent, there is used a desiccant that is dispersed in the hygroscopic resin layer 3 in the protection film 1. As the hygroscopic agent, in particular, there is used the one that is capable of attaining a humidity that is lower than a humidity attained by the above-mentioned ionic polymer, e.g., a crosslinked product of a monovalent metal salt of a poly(meth)acrylic acid in a granular form. The above hygroscopic agent is, usually, added in an amount of 50 to 1300 parts by weight per 100 parts by weight of the ionic polymer. When a cationic polymer is used as the ionic polymer, in particular, the hygroscopic agent is added in an amount of 50 to 1000 parts by weight per 100 parts by weight of the cationic polymer.

In the above hygroscopic base material (gas-barrier laminate) 10, the water-trapping layer 13 is formed, usually, by applying a composition for forming the water-trapping layer 13 on the surface of the inorganic barrier layer of the barrier film 11 that has been formed in advance or on the surface of a plastic base film followed by drying. The water-trapping layer 13 can also be formed by applying an adhesive for dry lamination, such as an urethane type adhesive, onto the barrier film 11.

The protection film 1 for use in the invention can be stuck to either surface of the hygroscopic base material (gas-barrier laminate) 10. Desirably, however, as shown in Fig. 3, the protection film 1 for use in the invention is directly stuck to the surface of the water-trapping layer 13. By sticking the protection film 1 to this position, the water released from the water-trapping layer 13 can be effectively trapped by the protection film 1 (hygroscopic resin layer 3) at the time of drying. Besides, the water can be effectively prevented from infiltrating into the water-trapping layer 13.

The hygroscopic base material 10 in a state of being stuck with the protection film 1 can be dried in vacuum, or can be dried by being packaged so will not to absorb the water from the atmosphere and then by being subjected to the aging treatment where it is held in an atmosphere heated at 35 to 120°C for not less than 48 hours.

After dried as described above, the protection film 1 is removed, and the hygroscopic base material that has been dried can be used as a sealing material for predetermined electronic articles or can, further, be laminated on other hygroscopic base material. It is, further, allowable to laminate, on other hygroscopic base material, the above hygroscopic base material 10 that has been dried without removing the protection film 1. Further, when the water-trapping layer 13 is formed on both surfaces of the barrier film 11 of the hygroscopic base material 10, the protection film 1 can be stuck to the respective water-trapping layers 13 to dry the hygroscopic base material 10.

Moreover, the final product may be shipped with the protection film 1 being stuck to the hygroscopic base material 10 to let the user remove the protection film 1 at the time of use. This assures to effectively prevent a decrease in the performance caused by the absorption of moisture during the transit of the hygroscopic base material 10.

EXAMPLES:

Excellent effects of the water-absorbing laminated protection film for use in the present invention will now be described by using the following Experimental Examples.

<Preparation of the hygroscopic base materials>

A moisture-adjusted PET film (A), a hygroscopic PET film (B) and a hygroscopic PET film (C) were used as the hygroscopic base materials. The films were prepared as described below.

Moisture-adjusted PET film (A):

A100 $\mu$m thick PET film was left to stand in an environment of 23°C·50%RH for 48 hours such that the water content therein was about 4,000 ppm. The film was used as the moisture-adjusted PET film (A).

Hygroscopic PET film (B):

A coating composition obtained by dispersing a hygroscopic agent in an ionic polymer was applied onto a 100 $\mu$m thick PET film such that the thickness thereof after dried was 3 $\mu$m. After dried, the film was left to stand in an environment of 23°C·50%RH for 48 hours such that the water content therein was about 10,000 ppm. The film was used as the hygroscopic PET film (B).

Hygroscopic PET film (C):

A coating composition obtained by dispersing a hygroscopic agent in an ionic polymer was applied onto both surfaces of a 100 $\mu$m thick PET film such that the thickness thereof after dried was 1.5 $\mu$m. The drying condition was so adjusted that the water content in the coating composition was 10,000 ppm. The film was used as the hygroscopic PET film (C) .

<Measuring the coefficients of water vapor permeability through the resin layers>

The resin layers only were grown, respectively, and the coefficients of water vapor permeability through the resin layers were measured by using the PERMATRAN (manufactured by MOCON Co.) under 40°C·90%RH.

<Evaluating the adhesiveness>

By using rubber rollers, the hygroscopic base material and the adhesive layer of the water-absorbing protection film were stuck together and were left to stand in an environment of 24°C.40%RH for 24 hours. Thereafter, they were subjected to the T-peel testing (tension speed of 300 mm/min.) with a width of 25 mm in compliance with the JIS Z 0237, and an average value thereof as measured with n = 3 was regarded to be the measured value.

<Evaluating the drying capability 1>

The hygroscopically working surface of the water-absorbing protection films prepared in Examples and Comparative Examples that will be described below and the above hygroscopic base materials were each overlapped one upon the other to prepare samples for evaluation. The samples for evaluation were left to stand in an environment of 23°C·50%RH for 12 hours. The samples were then put into an aluminum bag and were deaerated. Next, the samples were left to stand in an oven maintained at 70°C and were dried for 7 days therein. Thereafter, the water contents in the hygroscopic base materials in the samples were measured based on the Karl Fischer's method to evaluate the drying capabilities of the water-absorbing protection films. The results were as shown in Tables 1 to 3.

Evaluation was made on the following basis:

The water content was less than 650 ppm: ◎
The water content was not less than 650 ppm but was less than 1300 ppm: ○
The water content was not less than 1300 ppm: X
The water content was calculated according to the following formula.

$$\text{Water content [ppm]} = \text{amount of water detected } [\mu g] / \text{dry weight of the hygroscopic base material } [g]$$

<Evaluating the drying capability 2>

There were prepared water-absorbing protection films according to the procedures of Examples 2, 7 and 8 described below and the hygroscopic PET film (C). The films were wound up like rolls. Next, each water-absorbing protection film and the hygroscopic PET film (C) were unwound from the rolls. The films were wound up again into a roll in a manner of being laminated one upon the other but in such a fashion that the hygroscopically working surface of the water-absorbing protection film was in contact with the hygroscopic PET film (C) . Next, the roll of the films was hermetically packaged so as to be shielded from the atmosphere, and was left to stand in a temperature-controlled chamber maintained at 70°C for 4 days so as to be dried. Thereafter, the water contents in the hygroscopic base materials of the samples were measured by the Karl Fischer's method in order to evaluate the drying capabilities of the water-absorbing protection films. The results were as shown in Table 4. Evaluation was made on the following basis:

The water content was less than 650 ppm: ◎
The water content was not less than 650 ppm but was less than 1300 ppm: ○
The water content was not less than 1300 ppm: X
The water content was calculated according to the following formula.

$$\text{Water content [ppm]} = \text{amount of water detected } [\mu g] / \text{dry weight of the hygroscopic base material } [g]$$

In the following Examples and Comparative Examples, use was made of:

LDPE : SUMIKATHENE produced by Sumitomo Chemical Co., Ltd. and
CaO-dispersed LLDPE master batch: Bell-CML produced by Ohmi Chemical Industries Co., Ltd. as the LLDPE master batches obtained by dispersing a desiccant (calcium oxide) in a low-density polyethylene (LDPE) and in a linear low-density polyethylene (LLDPE).

<Example 1 (Reference Example)>

The LDPE was thrown, as the material for forming the surface protection resin layer, into an extruder for forming the surface protection resin layer.

On the other hand, the CaO-dispersed LLDPE master batch and the LDPE (resin for dilution) were mixed together such that the amount of the CaO was 25 parts by weight per 75 parts by weight of the resin component. The mixture was then thrown, as the material for forming the hygroscopic resin layer, into an extruder for forming the hygroscopic resin layer.

By co-extruding the surface protection resin layer and the hygroscopic resin layer, there was formed a water-absorbing protection film comprising two layers of the LDPE (surface protection resin layer, 15 $\mu$m thick) and the CaO-containing LLDPE layer (hygroscopic resin layer, 30 $\mu$m thick).

The moisture-adjusted PET film was used as the hygroscopic base material. The water-absorbing protection film formed above and the moisture-adjusted PET film (hygroscopic base material) were each cut into a size of 5 cm × 5 cm. The films were overlapped one upon the other in a manner that the hygroscopic resin layer of the water-absorbing protection film was closely adhered to the moisture-adjusted PET film to thereby prepare a sample for evaluation. The water-absorbing protection film was evaluated for its drying capability by the method described above. The results were as shown in Tables 1 to 3.

<Example 2>

As the adhesive resin, there was provided a metallocene polyolefin type elastomer (Kernel produced by Japan Polyethylene Co.).

The co-extrusion forming was carried out in the same manner as in Example 1 but using an extruder for forming an adhesive resin layer in addition to using the extruder for forming the surface protection resin layer and the extruder for forming the hygroscopic resin layer, and throwing the metallocene polyolefin type elastomer into the extruder for forming the adhesive resin layer. There was thus formed a water-absorbing protection film comprising the following three layers.

LDPE layer (surface protection resin layer, 15 $\mu$m)/CaO-containing LLDPE layer (hygroscopic resin layer, 30 $\mu$m)/metallocene polyolefin type elastomer layer (adhesive resin layer, 15 $\mu$m)

By using the above water-absorbing protection film and the moisture-adjusted PET film (hygroscopic base material), there was prepared a sample for evaluation in the same manner as in Example 1 to evaluate the drying capability of the water-absorbing protection film. The results were as shown in Tables 1 to 3.

<Example 3>

A water-absorbing protection film and a sample for evaluation were prepared by the same method as that of Example 2 but forming the adhesive resin layer in a thickness of 60 $\mu$ m. The water-absorbing protection film was evaluated for its drying capability. The results were as shown in Tables 1 to 3.

<Example 4>

A water-absorbing protection film and a sample for evaluation were prepared by the same method as that of Example 2 but forming the adhesive resin layer in a thickness of 45 $\mu$ m. The water-absorbing protection film was evaluated for its drying capability. The results were as shown in Tables 1 to 3.

<Example 5>

A water-absorbing protection film and a sample for evaluation were prepared by the same method as that of Example 2 but forming the adhesive resin layer in a thickness of 10 $\mu$ m. The water-absorbing protection film was evaluated for its drying capability. The results were as shown in Tables 1 to 3.

<Example 6>

A water-absorbing protection film and a sample for evaluation were prepared by the same method as that of Example 2 but forming the surface protection resin layer and the adhesive resin layer in a thickness of 10 $\mu$m. The water-absorbing protection film was evaluated for its drying capability. The results were as shown in Tables 1 to 3.

<Example 7>

A water-absorbing protection film and a sample for evaluation were prepared by the same method as that of Example 2 but forming the surface protection resin layer and the adhesive resin layer in a thickness of 35 μm. The water-absorbing protection film was evaluated for its drying capability. The results were as shown in Tables 1 to 3.

<Example 8>

As the surface protection resin layer, there was provided a barrier film that was obtained by depositing an inorganic film on a PET film (12 μm thick) such that the coefficient of moisture permeability was 1 $g/m^2$·day at 40°C.90%RH.

By using the extruder for forming the hygroscopic resin layer and the extruder for forming the adhesive resin layer, the co-extrusion forming was carried out in the same manner as in Example 1 to form a water-absorbing protection film comprising two layers.

Next, the film was subjected to a corona treatment on the side opposite to the hygroscopically working surface, and on where a two-package curing type epoxy adhesive was applied. Thereafter, the above barrier film was laminated thereon to obtain a water-absorbing protection film comprising the following three layers.

Barrier layer (surface protection resin layer, 12 μm)/ CaO-containing LLDPE layer (hygroscopic resin layer, 30 μm)/metallocene polyolefin type elastomer layer (adhesive resin layer, 15 μm)

By using the above water-absorbing protection film and the moisture-adjusted PET film (hygroscopic base material), there was prepared a sample for evaluation in the same manner as in Example 1 to evaluate the drying capability of the water-absorbing protection film. The results were as shown in Tables 1 to 3.

<Example 9>

A water-absorbing protection film and a sample for evaluation were prepared by the same method as that of Example 2 but using an EVA (NOVATEC, an ethylene/vinyl acetate copolymer produced by Nihon Polyethylene Co.) as the adhesive resin. The water-absorbing protection film was evaluated for its drying capability. The results were as shown in Tables 1 to 3.

<Example 10>

A water-absorbing protection film and a sample for evaluation were prepared by the same method as that of Example 2 but using a master batch that was obtained by dispersing an anhydrous magnesium sulfate (produced by Tomita pharmaceutical Co., Ltd.), as the desiccant, in an LLDPE (linear low-density polyethylene produced by Japan Polyethylene Co.). The water-absorbing protection film was evaluated for its drying capability. The results were as shown in Tables 1 and 2.

<Example 11>

A water-absorbing protection film and a sample for evaluation were prepared by the same method as that of Example 2 but using a master batch obtained by dispersing a zeolite powder (ZEOLUM, registered trademark, produced by Tosoh Co.), as the desiccant, in an LLDPE (linear low-density polyethylene produced by Japan Polyethylene Co.). The water-absorbing protection film was evaluated for its drying capability. The results were as shown in Tables 1 and 2.

<Example 12>

A water-absorbing protection film and a sample for evaluation were prepared by the same method as that of Example 2 but using an LLDPE (NOVATEC LL, a linear low-density polyethylene produced by Japan Polyethylene Co.) as the resin for diluting the master batch in which the desiccant has been dispersed. The water-absorbing protection film was evaluated for its drying capability. The results were as shown in Tables 1 and 2.

<Example 13>

A water-absorbing film and a sample for evaluation were prepared by the same method as that of Example 2 but using a PP (NOVATEC PP, a polypropylene produced by Japan Polypro Co.) as the resin for diluting the master batch in which the desiccant has been dispersed. The water-absorbing film was evaluated for its drying capability. The results were as shown in Tables 1 and 2.

<Example 14>

A film comprising two layers was formed by the same method as that of Example 1.

The film was subjected to a corona treatment on the side of the hygroscopically working surface, and on where a mixture of an acrylic adhesive agent A (SK Dyne 1499M produced by Soken Chemical & Engineering Co., Ltd.) and a curing agent was applied as the adhesive resin layer such that the thickness thereof after cured was 1 $\mu$m. There was thus formed a water-absorbing protection film comprising three layers, and from which a sample for evaluation was prepared. The water-absorbing protection film was evaluated for its drying capability in the same manner as in Example 1. The results were as shown in Tables 1 and 2.

<Example 15>

A sample for evaluation was prepared by the same method as that of Example 13 but so forming the adhesive resin layer that the thickness thereof after cured was 5 $\mu$m. The results were as shown in Tables 1 and 2.

<Example 16>

A sample for evaluation was prepared by the same method as that of Example 13 but so forming the adhesive resin layer that the thickness thereof after cured was 25 $\mu$m. The results were as shown in Tables 1 and 2.

<Example 17>

A sample for evaluation was prepared by the same method as that of Example 13 but applying, onto the film, a mixture of an acrylic adhesive agent B (SK Dyne 1435 produced by Soken Chemical & Engineering Co., Ltd.) and a curing agent as the adhesive resin layer such that the thickness thereof after cured was 15 $\mu$m. The results were as shown in Tables 1 and 2.

<Example 18>

A sample for evaluation was prepared by the same method as that of Example 2 but forming a water-absorbing protection film by using a hygroscopic PET film instead of using the hygroscopic base material, and overlapping the films in a manner that the adhesive resin layer of the water-absorbing protection film was in contact with the surface of the hygroscopic PET film on where the coating material was to be applied. By using the thus obtained sample for evaluation, the water-absorbing protection film was evaluated for its drying capability in the same manner as in Example 2. The results were as shown in Tables 1 and 2.

<Comparative Example 1>

A water-absorbing protection film (30 $\mu$m thick) comprising a hygroscopic resin layer alone was formed in the same manner as in Example 1 but forming no surface protection resin layer. By using the water-absorbing protection film, a sample for evaluation was prepared in the same manner as in Example 1 to evaluate the drying capability of the water-absorbing protection film. The results were as shown in Tables 1 to 3.

<Comparative Example 2>

A water-absorbing protection film (30 $\mu$m thick) was formed in the same manner as in Example 2 but forming the hygroscopic resin layer (30 $\mu$m thick) by using an LLDPE containing no CaO instead of using the CaO-containing LLDPE. By using the water-absorbing protection film, a sample for evaluation was prepared in the same manner as in Example 2 to evaluate the drying capability of the water-absorbing protection film. The results were as shown in Tables 1 to 3.

<Comparative Example 3>

A water-absorbing protection film (30 $\mu$m thick) comprising a hygroscopic resin layer alone was formed in the same manner as in Example 1 but forming no surface protection resin layer. Next, a two-package curing type epoxy adhesive was applied onto the film on the side opposite to the hygroscopically working surface, and a cellophane (20 $\mu$m thick, produced by Futamura Chemical Co., Ltd.) was laminated thereon to obtain a water-absorbing protection film. By using the water-absorbing protection film, a sample for evaluation was prepared in the same manner as in Example 1 to evaluate the drying capability of the water-absorbing protection film. The results were as shown in Tables 1 to 3.

<Comparative Example 4>

A water-absorbing protection film and a sample for evaluation were prepared by the same method as that of Example 2 but forming the surface protection resin layer in a thickness of 5 μm. The water-absorbing protection film was evaluated for its drying capability. The results were as shown in Tables 1 to 3.

<Comparative Example 5>

A water-absorbing protection film and a sample for evaluation were prepared by the same method as that of Example 1 but using a hygroscopic PET film instead of using the hygroscopic base material, and overlapping the films in a manner that the adhesive resin layer was in contact with the surface of the hygroscopic PET film on where the coating material was to be applied. The water-absorbing protection film was evaluated for its drying capability. The results were as shown in Tables 1 to 3.

Table 1

| | Surface protection resin layer | | | Adhesive resin layer | | |
|---|---|---|---|---|---|---|
| | Material | Thickness [μm] | Moisture Permeability [g/m$^2$·day] | Material | Thickness [μm] | Moisture permeability [g/m$^2$·day] |
| Ex. 1 | LDPE | 15 | 25 | - | - | - |
| Ex. 2 | LDPE | 15 | 25 | *1 | 15 | 30 |
| Ex. 3 | LDPE | 15 | 25 | *1 | 60 | 7 |
| Ex. 4 | LDPE | 15 | 25 | *1 | 45 | 10 |
| Ex. 5 | LDPE | 15 | 25 | *1 | 10 | 45 |
| Ex. 6 | LDPE | 10 | 40 | *1 | 10 | 45 |
| Ex. 7 | LDPE | 35 | 10 | *1 | 15 | 30 |
| Ex. 8 | barrier film | 12 | 1 | *1 | 15 | 30 |
| Ex. 9 | LDPE | 15 | 25 | EVA | 15 | 100 |
| Ex. 10 | LDPE | 15 | 25 | *1 | 15 | 30 |
| Ex. 11 | LDPE | 15 | 25 | *1 | 15 | 30 |
| Ex. 12 | LDPE | 15 | 25 | *1 | 15 | 30 |
| Ex. 13 | LDPE | 15 | 25 | *1 | 15 | 30 |
| Ex. 14 | LDPE | 15 | 25 | *2 | 1 | 6700 |
| Ex. 15 | LDPE | 15 | 25 | Acrylic adhesive A | 5 | 1340 |
| Ex. 16 | LDPE | 15 | 25 | Acrylic adhesive A | 25 | 270 |
| Ex. 17 | LDPE | 15 | 25 | Acrylic adhesive B | 15 | 500 |
| Ex. 18 | LDPE | 15 | 25 | *1 | 15 | 30 |
| Comp. Ex. 1 | - | - | - | - | - | - |
| Comp. Ex. 2 | LDPE | 15 | 25 | *1 | 15 | 30 |
| Comp. Ex. 3 | cellophane | 20 | 2860 | - | - | - |
| Comp. Ex. 4 | LDPE | 5 | 75 | *1 | 5 | 90 |
| Comp. Ex. 5 | - | - | - | - | - | - |

*1 Metallocene polyolefin type elastomer, *2 Acrylic two-package curing type resin

Table 1 (continued)

| | Diluting resin | Hygroscopic component | Hygroscopic base material |
|---|---|---|---|
| Ex. 1 | LDPE | CaO | A |
| Ex. 2 | LDPE | CaO | A |
| Ex. 3 | LDPE | CaO | A |
| Ex. 4 | LDPE | CaO | A |
| Ex. 5 | LDPE | CaO | A |
| Ex. 6 | LDPE | CaO | A |
| Ex. 7 | LDPE | CaO | A |
| Ex. 8 | LDPE | CaO | A |
| Ex. 9 | LDPE | CaO | A |
| Ex. 10 | LDPE | $MgSO_4$ (anhydrous) | A |
| Ex. 11 | LDPE | zeolite | A |
| Ex. 12 | LLDPE | CaO | A |
| Ex. 13 | PP | CaO | A |
| Ex. 14 | LDPE | CaO | A |
| Ex. 15 | LDPE | CaO | A |
| Ex. 16 | LDPE | CaO | A |
| Ex. 17 | LDPE | CaO | A |
| Ex. 18 | LDPE | CaO | B |
| Comp. Ex. 1 | LDPE | CaO | A |
| Comp. Ex. 2 | LDPE | - | A |
| Comp. Ex. 3 | LDPE | CaO | A |
| Comp. Ex. 4 | LDPE | CaO | A |
| Comp. Ex. 5 | LDPE | CaO | B |

Table 2

| | Adhesive force [N/25 mm] | Results of Evaluation 1 | |
|---|---|---|---|
| | | Drying capability | Water content after drying [ppm] |
| Ex. 1 | - | ◎ | 380 |
| Ex. 2 | <0.1 | ◎ | 450 |
| Ex. 3 | <0.1 | ○ | 660 |
| Ex. 4 | <0.1 | ◎ | 610 |
| Ex. 5 | <0.1 | ◎ | 420 |
| Ex. 6 | <0.1 | ◎ | 470 |
| Ex. 7 | <0.1 | ◎ | 420 |
| Ex. 8 | <0.1 | ◎ | 380 |
| Ex. 9 | 0.4 | ◎ | 380 |
| Ex. 10 | <0.1 | ◎ | 400 |
| Ex. 11 | <0.1 | ○ | 740 |
| Ex. 12 | <0.1 | ◎ | 470 |
| Ex. 13 | <0.1 | ◎ | 450 |

(continued)

| | Adhesive force [N/25 mm] | Results of Evaluation 1 | |
|---|---|---|---|
| | | Drying capability | Water content after drying [ppm] |
| Ex. 14 | <0.1 | ◎ | 380 |
| Ex. 15 | 0.4 | ◎ | 380 |
| Ex. 16 | 1.2 | ◎ | 380 |
| Ex. 17 | 2.5 | ◎ | 380 |
| Ex. 18 | <0.1 | ◎ | 550 |
| Comp. Ex. 1 | - | × | 1650 |
| Comp. Ex. 2 | <0.02 | × | 3750 |
| Comp. Ex. 3 | <0.02 | × | 1550 |
| Comp. Ex. 4 | <0.02 | × | 1350 |
| Comp. Ex. 5 | <0.02 | × | 4550 |

Table 3

| | Water content before drying [ppm] | Water content after 3 days (measured value [ppm]) | Water content after 7 days (measured value [ppm]) |
|---|---|---|---|
| Ex. 1 | 4020 | ○ (520) | ○ (460) |
| Ex. 2 | 4010 | ○ (500) | ○ (450) |
| Ex. 3 | 4020 | ○ (510) | ○ (450) |
| Ex. 4 | 4000 | ○ (500) | ○ (460) |
| Ex. 5 | 4010 | △ (700) | ○ (600) |
| Ex. 6 | 4020 | ○ (510) | ○ (450) |
| Ex. 7 | 4000 | ○ (520) | ○ (460) |
| Ex. 8 | 3990 | ○ (530) | ○ (470) |
| Ex. 9 | 10020 | ○ (700) | ○ (550) |
| Comp. Ex. 1 | 4020 | × (3100) | × (3150) |
| Comp. Ex. 2 | 4010 | × (3700) | × (3750) |
| Comp. Ex. 3 | 4010 | × (3300) | × (2990) |
| Comp. Ex. 4 | 10010 | × (9700) | × (9800) |

Table 4

| | Surface protection resin layer | | | Adhesive resin layer | | |
|---|---|---|---|---|---|---|
| | Material | Thickness [μm] | Moisture permeability [$g/m^2 \cdot day$] | Material | Thickness [μm] | Moisture permeability [$g/m^2 \cdot day$] |
| Ex. 2 | LDPE | 15 | 25 | *1 | 15 | 30 |
| Ex. 7 | LDPE | 35 | 10 | *1 | 15 | 30 |
| Ex. 8 | barrier film | 12 | 1 | *1 | 15 | 30 |

*1 Metallocene polyolefin type elastomer

Table 4 (continued)

| | Diluting resin | Hygroscopic component | Hygroscopic base material | Adhesive force [N/25 mm] | Results of Evaluation 2 | |
|---|---|---|---|---|---|---|
| | | | | | Drying capability | Water content after drying [ppm] |
| Ex. 2 | LDPE | CaO | C | <0.1 | ◎ | 480 |
| Ex. 7 | LDPE | CaO | C | <0.1 | ◎ | 550 |
| Ex. 8 | LDPE | CaO | C | <0.1 | ○ | 700 |

The results of evaluation 1 of the drying capability tells that upon using the water-absorbing protection film (laminated film) for use in the present invention, the water content in the hygroscopic base material can be effectively decreased. Specifically, the hygroscopic function can be improved by the use of a chemical adsorbent. Moreover, the water-absorbing protection film exhibits a high hygroscopic capability even for a hygroscopic PET film that has a large water content before it is dried.

As demonstrated in Example 17, further, the water-absorbing protection film exhibits a drying capability without problem even when the adhesive resin has a large adhesive force. In this case, however, a load is exerted on the hygroscopic base material when the protection film is to be removed, and the appearance may become defective after the protection film is removed.

On the other hand, when the surface protection resin layer is formed by using a material having a large coefficient of moisture permeability or when no surface protection resin layer is formed as demonstrated in Comparative Examples, the desiccant is deactivated due to the water in the atmosphere before the drying treatment is executed. In this case, therefore, the hygroscopic activity is lost, and the drying capability is not obtained.

Further, the results of evaluation 2 of the drying capability tell that when the water-absorbing protection film is wound up as a roll, the drying is executed more efficiently when the surface protection resin layer has a coefficient of moisture permeability which is high to a certain degree.

Description of Reference Numerals:

1: water-absorbing laminated protection film
3: hygroscopic resin layer
5: surface protection resin layer
7: hygroscopically working surface
9: adhesive resin layer
10: hygroscopic base material
11: barrier film
13: water-trapping layer

## Claims

1. Use of a water-absorbing laminated protection film in drying a hygroscopic base material that includes a water-trapping layer having a water-trapping property, wherein the water-absorbing laminated protection film includes a hygroscopic resin layer in which a desiccant is dispersed and a surface protection resin layer provided on one surface of said hygroscopic resin layer, wherein said surface protection resin layer has a coefficient of moisture permeability of not more than 40 $g/m^2$·day at 40°C·90%RH, and the other surface of said hygroscopic resin layer is a hygroscopically working surface, wherein on the hygroscopically working surface of said hygroscopic resin layer, there is provided an adhesive resin layer having a coefficient of moisture permeability higher than that of said surface protection resin layer;
and wherein the use comprises: (a) the hygroscopically working surface of said water-absorbing laminate film being opposed, and stuck, to said hygroscopic base material via the adhesive resin layer in the step of drying; and (b) after the drying, the water-absorbing laminated protection film being removed from the hygroscopic base material.

2. Use of the water-absorbing laminated protection film according to claim 1, wherein said surface protection resin layer has a coefficient of moisture permeability of not less than 1.0 $g/m^2$·day at 40°C.90%RH.

3. Use of the water-absorbing laminated protection film according to claim 1, wherein said adhesive resin layer has a coefficient of moisture permeability of not less than 10 $g/m^2$ ·day at 40°C·90%RH.

4. Use of the water-absorbing laminated protection film according to claim 1, wherein said desiccant is an agent that exhibits a chemically adsorbing property upon reacting with the water.

5. Use of the water-absorbing laminated protection film according to claim 4, wherein said desiccant is a calcium oxide.

6. Use of the water-absorbing laminated protection film according to claim 1, wherein said hygroscopic resin layer is a layer obtained by dispersing said desiccant in an olefin type resin which is selected from a low-density polyethylene, a high-density polyethylene, a polypropylene, a poly 1-butene, a poly 4-methyl-1-pentene or a random or block copolymer of $\alpha$-olefins such as ethylene, propylene, 1-butene or 4-methyl-1-pentene, or a cyclic olefin copolymer thereof.

## Patentansprüche

1. Verwendung einer wasserabsorbierenden laminierten Schutzfolie beim Trocknen eines hygroskopischen Basismaterials, die eine wassereinfangende Schicht mit einer wassereinfangenden Eigenschaft aufweist, wobei die wasserabsorbierende laminierte Schutzfolie eine hygroskopische Harzschicht, in der ein Trockenmittel dispergiert ist, und eine Oberflächenschutzharzschicht, die auf einer Oberfläche der hygroskopischen Harzschicht vorgesehen ist, enthält, wobei die Oberflächenschutzharzschicht einen Feuchtigkeitsdurchlässigkeitskoeffizienten von nicht mehr als 40 g/m$^2$ · Tag bei 40 °C · 90 %RF aufweist und die andere Oberfläche der hygroskopischen Harzschicht eine hygroskopisch arbeitende Oberfläche ist, wobei auf der hygroskopisch arbeitenden Oberfläche der hygroskopischen Harzschicht eine klebende Harzschicht vorgesehen ist, die einen höheren Feuchtigkeitsdurchlässigkeitskoeffizienten aufweist als die Oberflächenschutzharzschicht,
und wobei die Verwendung Folgendes umfasst: (a) die hygroskopisch wirkende Oberfläche wird der wasserabsorbierenden Laminatfolie im Schritt des Trocknens über die klebende Harzschicht dem hygroskopischen Grundmaterial gegenübergestellt und mit diesem verklebt; und (b) nach dem Trocknen wird die wasserabsorbierende Verbundschutzfolie von dem hygroskopischen Grundmaterial entfernt.

2. Verwendung der wasserabsorbierenden laminierten Schutzfolie nach Anspruch 1, wobei die Oberflächenschutzharzschicht einen Feuchtigkeitsdurchlässigkeitskoeffizienten von nicht weniger als 1,0 g/m$^2$ · Tag bei 40°C · 90 %RF aufweist.

3. Verwendung der wasserabsorbierenden laminierten Schutzfolie nach Anspruch 1, wobei die klebende Harzschicht einen Feuchtigkeitsdurchlässigkeitskoeffizienten von nicht weniger als 10 g/m$^2$ · Tag bei 40°C · 90 %RF aufweist.

4. Verwendung der wasserabsorbierenden laminierten Schutzfolie nach Anspruch 1, wobei das Trockenmittel ein Mittel ist, das bei Reaktion mit dem Wasser eine chemisch adsorbierende Eigenschaft aufweist.

5. Verwendung der wasserabsorbierenden laminierten Schutzfolie nach Anspruch 4, wobei das Trockenmittel ein Calciumoxid ist.

6. Verwendung des wasserabsorbierenden Schutzfolienverbundes nach Anspruch 1, wobei die hygroskopische Harzschicht eine Schicht ist, die durch Dispergieren des Trockenmittels in einem Harz vom Olefin-Typ erhalten wird, das ausgewählt ist aus einem Polyethylen niedriger Dichte, einem Polyethylen hoher Dichte, einem Polypropylen, einem Poly-1-buten, einem Poly-4-methyl-1-penten oder einem statistischen oder Block-Copolymer von $\alpha$-Olefinen, wie Ethylen, Propylen, 1-Buten oder 4-Methyl-1-penten, oder einem cyclischen Olefin-Copolymer davon.

## Revendications

1. Utilisation d'un film de protection stratifié absorbant l'eau dans le séchage d'un matériau de base hygroscopique qui comprend une couche piégeant l'eau ayant une propriété de piégeage de l'eau, dans laquelle le film de protection stratifié absorbant l'eau comprend une couche de résine hygroscopique dans laquelle un déshydratant est dispersé et une couche de résine de protection de surface disposée sur une surface de ladite couche de résine hygroscopique, ladite couche de résine de protection de surface ayant un coefficient de perméabilité à l'humidité ne dépassant pas 40 g/m$^2$·jour à 40°C·90% HR, et l'autre surface de ladite couche de résine hygroscopique est une surface de travail hygroscopique, dans laquelle sur la surface de travail hygroscopique de ladite couche de résine hygroscopique, il est prévu une couche de résine adhésive ayant un coefficient de perméabilité à l'humidité supérieur à celui de ladite couche de résine de protection de surface ;
et dans laquelle l'utilisation comprend : (a) la surface de travail hygroscopique dudit film stratifié absorbant l'eau étant opposée et collée audit matériau de base hygroscopique via la couche de résine adhésive dans l'étape de séchage ; et (b) après le séchage, le film de protection stratifié absorbant l'eau étant retiré du matériau de base hygroscopique.

2. Utilisation du film de protection stratifié absorbant l'eau selon la revendication 1, dans laquelle ladite couche de résine de protection de surface a un coefficient de perméabilité à l'humidité non inférieur à 1,0 g/m$^2$·jour à 40°C 90 % HR.

3. Utilisation du film de protection stratifié absorbant l'eau selon la revendication 1, dans laquelle ladite couche de résine adhésive a un coefficient de perméabilité à l'humidité non inférieur à 10 g/m$^2$·jour à 40°C 90 % HR.

4. Utilisation du film de protection stratifié absorbant l'eau selon la revendication 1, dans laquelle ledit déshydratant est un agent qui présente une propriété d'adsorption chimique lors de la réaction avec l'eau.

5. Utilisation du film de protection stratifié absorbant l'eau selon la revendication 4, dans laquelle ledit déshydratant est un oxyde de calcium.

6. Utilisation du film de protection stratifié absorbant l'eau selon la revendication 1, dans laquelle ladite couche de résine hygroscopique est une couche obtenue en dispersant ledit déshydratant dans une résine de type oléfine qui est choisie parmi un polyéthylène basse densité, un polyéthylène haute densité, un polypropylène, un poly 1-butène, un poly 4-méthyl-1-pentène ou un copolymère aléatoire ou séquencé d'$\alpha$-oléfines telles que l'éthylène, le propylène, le 1-butène ou le 4-méthyl-1-pentène, ou un copolymère d'oléfine cyclique de ceux-ci.

Fig. 1

1
5
3
7

Fig. 2

1
5
3
9
7

Fig. 3

11
10
13
1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006326838 A
- JP 2009090633 A
- JP 2011131395 A
- WO 2014123197 A
- JP 5109606 B
- JP 2014221514 A
- US 2016220979 A
- JP 2014168949 A
- JP 2014168950 A